# EUROPEAN PATENT SPECIFICATION

(11) **EP 2 897 328 B1**
(45) Date of publication and mention of the grant of the patent: **25.01.2017**
(21) Application number: 13837728.8
(22) Date of filing: 12.09.2013
(51) Int. Cl.: H04L 12/46, H04L 12/741

(54) **METHOD, SYSTEM AND APPARATUS FOR ESTABLISHING COMMUNICATION LINK**
VERFAHREN, SYSTEM UND VORRICHTUNG ZUR HERSTELLUNG EINER KOMMUNIKATIONSVERBINDUNG
PROCÉDÉ, SYSTÈME ET APPAREIL D'ÉTABLISSEMENT DE LIAISON DE COMMUNICATION

(30) Priority: 14.09.2012 CN 201210341669
(43) Date of publication of application: 22.07.2015
(73) Proprietor: ZTE Corporation, Shenzhen, Guangdong 518057 (CN)
(72) Inventor: ZHANG, Baoya, Shenzhen Guangdong 518057 (CN)
(74) Representative: Gevers Patents
(86) International application number: PCT/CN2013/083425
(87) International publication number: WO 2014/040553

(56) References cited:
- EP-A2- 1 351 450
- CN-A- 101 588 379
- CN-A- 101 616 082
- CN-A- 102 333 028
- CN-A- 102 594 651
- CN-A- 102 857 400
- US-A1- 2007 206 492
- LASSERRE M ET AL: "Virtual Private LAN Service (VPLS) Using Label Distribution Protocol (LDP) Signaling; rfc4762.txt", 20070101, 1 January 2007 (2007-01-01), XP015055051, ISSN: 0000-0003

## Description

### TECHNICAL FIELD

The disclosure relates to the Layer 2 Virtual Private Networks (L2VPN) technology in the field of packet communications, and in particular to a method and device for establishing a broadcast domain in the L2VPN.

### BACKGROUND

The L2VPN is composed of a Provider Edge (PE) and a Customer Edge (CE); connection between the PE and the CE is an Attachment Circuit (AC), and connection between the PE and the PE is a Pseudo Wire (PW). There are two networking models for transmitting packet in the L2VPN, namely the Virtual Private Wire Service (VPWS) and the Virtual Private Local Area Network Service (VPLS).

The VPWS is a point-to-point service model, that is, there is a one-to-one relationship between the AC and the PW in a Virtual Private Network (VPN) composed of devices between a source CE and a destination CE. However, in the point-to-point service model, a single PW cannot be reused by multiple VPNs, so it is needed to add a new PW when a VPN is added, which causes inconvenience to the configuration of the PE. The VPLS is a multipoint-to-multipoint service model, that is, a broadcast packet is sent out through multiple PWs and/or ACs in the VPN. Specifically, the PE duplicates the broadcast packet according to the number of all the PWs and ACs associated with the PE itself, and determines at an exit whether to discard the broadcast packet according to the attribute of each exit PW and/or AC and inlet PW and/or AC. If it is determined to discard the broadcast packet, the exit discards the broadcast packet; if it is determined to not discard the broadcast packet, the broadcast packet is sent out from each outgoing PW and/or AC. However, in the process of sending the broadcast packet in the VPLS, the PE cannot establish a smaller broadcast domain in the VPN, so the PE performs some unnecessary packet duplication, which wastes internal channel bandwidth of the PE.

Thus, in the existing L2VPN technology, because the single PW cannot be reused by multiple VPNs in the point-to-point service model, such as the VPWS, a lot of overhead and workload of configuring the PW by the PE is required; in the multipoint-to-multipoint service model, such as the VPLS, the PE cannot establish a smaller broadcast domain in the VPN, so the PE performs some unnecessary packet duplication, which wastes internal channel bandwidth of the PE.

CN 102 333 028 A discloses a method for sending messages by using a layered bi-layer virtual private network. If the same MAC (media access control) address is learnt in an equivalent PW (pseudo wire), the path information on the equivalent PW, in which the MAC address is learnt formerly, is not deleted. As such, the method is capable of avoiding the message loss or message broadcasting caused by learning about the MAC address again due to the switch between a main virtual link and a standby virtual link.

CN 102 594 651 A discloses a service protection method in a PBB H-VPLS network. In particular, when a main path between a first UPE and a first NPE is broken, the first UPE and a second UPE remove a learned PBB packaging table, a learned decapsulation table and a C-MAC forwarding table respectively. Afterwards, the first UPE and the second UPE carry out multicast forwarding of flows which are sent to a PW side and they trigger learning of a local terminal user C-MAC. Specifically, the second NPE forwards a message received by the first UPE according to B-DMAC and learns of B-SMAC, while the first UPE and the second UPE carry out multicast forwarding of the flows sent to an access circuit (AC) side and trigger learning of the PBB packaging table, the decapsulation table and far-end user C-MAC. The method has the advantage that, when a main PW is broken, a service flow is rapidly switched to a standby PW and time of service interruption is substantially reduced.

### SUMMARY

In view of this, the disclosure is intended to provide a method and device for establishing a broadcast domain in the L2VPN, which can reduce overhead and overload of configuring the PW by the PE, and reduce the waste of internal channel bandwidth caused by VPLS broadcast.

The features of the method and device according to the present invention are defined in the independent claims, and the preferable features according to the present invention are defined in the dependent claims.

The method and device for establishing a broadcast domain in the L2VPN provided by the embodiments of the disclosure can acquire according to the VBD ID, for the packet sent from the AC, the exit corresponding to the VBD from the VBD table, and send the packet out after encapsulating it into the packet of this VBD based on the encapsulation rule; the method and device can also acquire according to the VBD ID, for the packet sent from the PW, the exit corresponding to the VBD from the VBD table, and send the packet out after de-encapsulating it based on the de-encapsulation rule. Thus, in the point-to-point service model, such as the VPWS, the new VBD domains can be distinguished through the VBD ID, and there is no need to configure more PWs in the PE to transmit data in the different VPNs, thereby reducing overhead and overload of configuring the PW; besides, in the multipoint-to-multipoint service model, such as the VPLS, the new VBD domains can be distinguished through the VBD ID, and broadcast packets sent to the different VBDs can be distinguished by the PE, thereby reducing the case of discarding the packet after duplicating it, and further reducing the waste of internal channel bandwidth caused by the VPLS broadcast.

### BRIEF DESCRIPTION OF THE DRAWINGS

Fig. 1 is a flowchart of a method for establishing a broadcast domain in the L2VPN according to an embodiment of the disclosure; and
Fig. 2 is a structural diagram of a device for establishing a broadcast domain in the L2VPN according to an embodiment of the disclosure.

### DETAILED DESCRIPTION

The basic idea of the disclosure is: when a packet is received from the AC, finding out the VBD ID of the packet according to the AC attribute table; if the exit of packet cannot be acquired from the forwarding table according to the VBD ID and the destination MAC address of the packet, then acquiring the exit corresponding to the VBD from the VBD table according to the VBD ID, and sending the packet out after encapsulating it based on the encapsulation rule; when a packet is received from the PW, if the exit of packet cannot be acquired from the forwarding table according to the VBD ID and the destination MAC address of the packet, then acquiring the exit corresponding to the VBD from the VBD table according to the VBD ID, and sending the packet out after de-encapsulating it based on the de-encapsulation rule.

The disclosure is further elaborated below in combination with the accompanying drawings and embodiments.

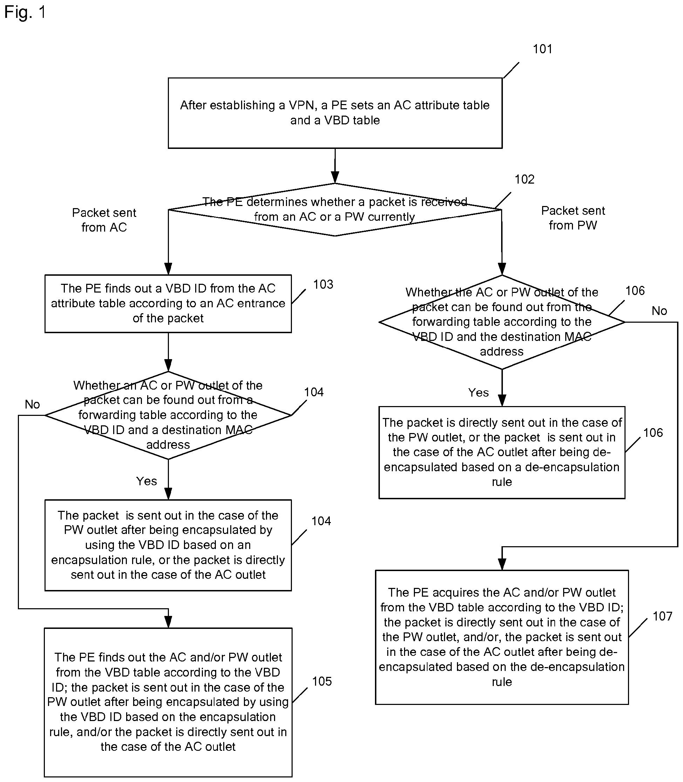

As shown in Fig. 1, the method for establishing a broadcast domain in the L2VPN provided by an embodiment of the disclosure includes the following steps.

Step 101: After establishing the VPN, the PE sets the AC attribute table and the VBD table;
specifically, performing VPN configuration to the PE, creating the VPN, and setting the AC attribute table and the VBD table according to a VBD networking plan;
here, performing VPN configuration and creating the VPN belongs to the existing technology, and may include: creating, managing and maintaining a PW connection, so it will not be repeated here;
the VBD networking plan is: according to an actual networking need, dividing each VPN into one or more VBD, setting the ID for each VBD, and assigning constituent devices for each VBD;
the AC attribute table is a table composed of the information of the AC entrance on the PE, and the VBD ID and the VPN ID corresponding to the AC entrance; wherein the information of the AC entrance is information of logical interface defined for each AC connection in the PE, and it may include the ID and attribute of the interface and other contents;
the VBD table is a form composed of one or more VBD records; each VBD record is marked by the VBD ID, and each VBD record includes the information of all the AC and PW exits assigned to the VBD by the PE currently.

In addition, after completing Step 101, it is also allowed to determine whether to open a VBD function according to the actual need; if so, then executing Step 102; or else, performing subsequent processing according to the existing technology, so it will not be repeated here; the processing flow ends.

Step 102: The PE determines whether the packet is received from the AC or the PW; if the packet is received from the AC, then executing Step 103; if the packet is received from the PW, then executing Step 106.

Step 103: The PE finds out the VBD ID from the AC attribute table according to the AC entrance of the packet.

Here, finding out the VBD ID from the AC attribute table includes: finding from the AC attribute table a record corresponding to the information of the AC entrance of the packet, and extracting from the found record the VPN ID and one or more VBD ID corresponding to the entrance;
the AC entrance of the packet is information corresponding to an AC interface which receives the packet, and the method for acquiring it belongs to the existing technology, so it will not repeated here.

Step 104: The PE extracts the destination MAC address from the packet, and determines whether the AC or PW exit of the packet can be found out from the forwarding table according to the VBD ID and the destination MAC address; if so, then the packet whose exit is PW is sent out after being encapsulated by the VBD ID based on the encapsulation rule, or the packet whose exit is AC is directly sent out, and the processing flow ends; or else, executing Step 105.

Here, the forwarding table includes: source MAC address, destination MAC address, VBD ID, VPN ID, and information of PW or AC exits of the packet; there can be multiple forwarding tables in the PE, and the destination MAC address, the VBD ID and the VPN ID are used as the ID for distinguishing the forwarding tables; the method for establishing the forwarding table belongs to the existing technology, so it will not be repeated here.

The encapsulation rule is adding the VBD ID in the specified field of the packet; wherein the packet can be the existing flow label in the existing technology; sending is according to the existing technology, so it will not be repeated here.

Step 105: The PE finds out the AC and/or PW exits from the VBD table according to the VBD ID; the packet whose exit is PW is sent out after being encapsulated by the VBD ID based on the encapsulation rule, and/or the packet whose exit is AC is directly sent out; the processing flow ends.

Specifically, the PE uses the VBD ID to find, from the VBD table, all the AC and/or PW exits in the same VBD; the PE determines whether the current mode is the VPWS mode or the VPLS mode; if the PE is in the VPWS mode currently, then the packet whose exit is PW is sent out after being encapsulated by the VBD ID based on the encapsulation rule, or the packet whose exit is AC is directly sent out;

if the PE is in the VPLS mode currently, then the packet is duplicated according to the number of the AC and/or PW exits, and/or the packet whose exit is PW is sent out after being encapsulated by the VBD ID based on the encapsulation rule, and the packet whose exit is AC is directly sent out.

Step 106: The PE extracts the VBD ID and the destination MAC address of the packet, and determines whether the AC or PW exit of the packet can be found out from the forwarding table according to the VBD ID and the destination MAC address; if so, then the packet whose exit is PW is directly sent out, or the packet whose exit is AC is sent out after being de-encapsulated based on the de-encapsulation rule, and then the processing flow ends; or else, executing Step 107.

Here, the de-encapsulation rule is deleting the VBD ID and PW information in the packet; wherein the PW information is content added when the packet is transmitted from the PW and specified in the existing technology, so it will not be repeated here.

Step 107: The PE acquires the AC and/or PW exit from the VBD table according to the VBD ID; the packet whose exit is PW is directly sent out, and/or, the packet whose exit is AC is sent out after being de-encapsulated based on the de-encapsulation rule.

Specifically, the PE uses the VBD ID to find, from the VBD table, all the AC and/or PW exits in the same VBD; the PE determines whether the current mode is the VPWS mode or the VPLS mode; if the PE is in the VPWS mode currently, then the packet whose exit is PW is sent out directly, or the packet whose exit is AC is sent out after being de-encapsulated based on the de-encapsulation rule;
if the PE is in the VPLS mode currently, then the packet is duplicated according to the number of the AC and/or PW exits, the packet whose exit is PW is sent out directly, and/or, the packet whose exit is AC is sent out after being de-encapsulated based on the de-encapsulation rule.

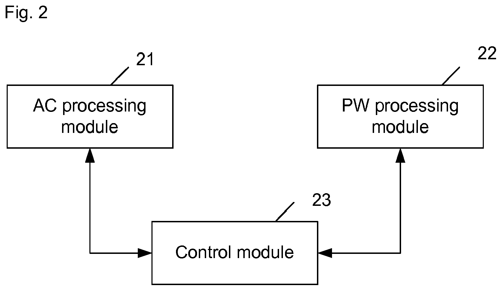

As shown in Fig. 2, the device for establishing a broadcast domain in the L2VPN provided by an embodiment of the disclosure includes: the AC processing module 21, the control module 23 and the PW processing module 22; wherein,
the AC processing module 21 is configured to, when a packet is received from the control module 23, find out the VBD ID of the packet according to the AC attribute table, and if the exit of packet cannot be acquired from the forwarding table of the control module 23 according to the VBD ID and the destination MAC address of the packet, acquire the exit corresponding to the VBD from the VBD table according to the VBD ID, and send the packet out after encapsulating it based on the encapsulation rule;
the control module 23 is configured to, when a packet is received from the AC, send the packet to the AC processing module 21, and when a packet is received from the PW, send the packet to the PW processing module 22, and provide the forwarding table and the VBD table for the AC processing module 21 and the PW processing module 22; and
the PW processing module 22 is configured to, when a packet is received, if the exit of packet cannot be acquired from the forwarding table of the control module 23 according to the VBD ID and the destination MAC address of the packet, acquire the exit corresponding to the VBD from the VBD table of the control module 23 according to the VBD ID, and send the packet out after de-encapsulating it based on the de-encapsulation rule.

The control module 23 is configured to, after creating the VPN, set the AC attribute table, a VBD information table, an MAC address table and a label table.

The control module 23 is configured to perform the VPN configuration to the PE, create the VPN, and set the AC attribute table and the VBD information table according to the VBD networking plan; the VBD networking plan is: according to the actual networking need, dividing each VPN into one or more VBD, setting the ID for each VBD, and assigning constituent devices for each VBD

The control module 23 is configured to save the AC attribute table; the AC attribute table is a table composed of the information of the AC entrance on the PE, and the VBD ID and the VPN ID corresponding to the AC entrance; wherein the information of the AC entrance is the information of logical interface defined for each AC connection in the PE, and it may include the ID and attribute of the interface and other contents.

The control module 23 is configured to save the VBD table; the VBD table is a form composed of one or more VBD records; each VBD record is marked by the VBD ID, and each VBD record includes the information of all the AC and PW exits assigned to the VBD by the PE currently; the information of the AC and PW exits can be the ID of the AC and the PW.

The control module 23 is configured to maintain a PW information table which includes a PW label table and a PW attribute table; the PW label table includes the VPN ID that the PW belongs to; the PW attribute table is used for reusing VPN on MS-PW and downlink forwarding of MS-PW, and acquiring the PW according to the PW and the VBD ID.

The control module 23 is configured to determine in real time whether the packet received currently is sent from the AC or the PW; if the packet is received from the AC, then the packet is sent to the AC processing module 21; if the packet is received from the PW, then the packet is sent to the PW processing module 22.

The AC processing module 21 is configured to extract the destination MAC address of the packet, determine whether the PW or AC exit of the packet can be found out from the forwarding table of the control module 23 according to the VBD ID and the destination MAC address, if so, then acquire the PW or AC exit of the packet, and send out the packet whose exit is PW after encapsulating it by the VBD ID, or directly send out the packet whose exit is AC, or else, use the VBD ID to find, from the VBD table of the control module 23, all the AC and/or PW exits in the same VBD; the AC processing module is further configured to, if the PE is in the VPWS mode currently, then send out the packet whose exit is PW after encapsulating it by the VBD ID, or directly send out the packet whose exit is AC, and if the PE is in the VPLS mode currently, then duplicate the packet according to the number of the AC and/or PW exits, and send out the packet whose exit is PW after encapsulating it by the VBD ID, and/or directly send out the packet whose exit is AC.

The control module 23 is configured to save the forwarding table which is composed of the source MAC address, the destination MAC address, the VBD ID, the VPN ID, and the information of PW or AC exits of the packet; there can be multiple forwarding tables; the destination MAC address, the VBD ID and the VPN ID are used as the ID for distinguishing the forwarding tables; the MAC address table is stored by using the destination MAC address and the VBD ID, or using the destination MAC address, the VBD ID and the VPN ID; if the VBD ID is globally unique, the former can be used; but if the VBD ID is unique in the VPN, it is needed to use the latter.

The PW processing module 22 is configured to extract the destination MAC address of the packet, determine whether the PW or AC exit of the packet can be found out from the forwarding table of the control module 23 according to the VBD ID and the destination MAC address, if so, then acquire the PW or AC exit of the packet, and directly send out the packet whose exit is PW, or send out the packet whose exit is AC after de-encapsulating it based on the de-encapsulation rule, or else, use the VBD ID to find, from the VBD table of the control module 23, all the AC and/or PW exits in the same VBD, duplicate the packet according to the number of the AC and/or PW exits, send out the packet from the AC after deleting a PW header and the VBD ID in the packet whose exit is AC, and/or directly send out the packet whose exit is PW.

The above device may be installed in the PE as a logical unit. The AC processing module 21 and the PW processing module 22 may be implemented by a Packet Processor (PP) in the PE; the control module 23 may be implemented by a Central Processing Unit (CPU) chip in the PE.

The above is only the preferred embodiments of the disclosure and not intended to limit the scope of the claims of the disclosure.

## Claims

1. A method for establishing a broadcast domain in a Layer 2 Virtual Private Network, L2VPN, comprising a Provider Edge, PE, and a Customer Edge, CE, a connection between the PE and the CE being an Attachment Circuit, AC, and a connection between the PE and the PE being a Pseudo Wire, PW, the method comprising the steps of:
when a packet is received from the AC, finding out (103) a Virtual Bridge Domain Index, VBD ID, of the packet according to an AC attribute table; in the case where it cannot be acquired an exit for the packet from a forwarding table according to the VBD ID and a destination Media Access Control, MAC, address of the packet, acquiring (105) an exit corresponding to the Virtual Bridge Domain, VBD, from a VBD table according to the VBD ID, and sending the packet out after encapsulating it based on an encapsulation rule, the VBD ID being the index set for each VBD and the VBD being obtained by dividing each VPN into one or more VBD;
when a packet is received from the PW, the packet being encapsulated by using the VBD ID based on an encapsulation rule, in the case where it cannot be acquired an exit for the packet from the forwarding table according to the VBD ID encapsulated in the packet and the destination MAC address of the packet, acquiring (107) the exit corresponding to the VBD from the VBD table according to the VBD ID, and sending the packet out after de-encapsulating it based on a de-encapsulation rule,
wherein the AC attribute table is a table composed of information of an AC entrance on the PE, and the VBD ID and a VPN ID corresponding to the AC entrance, the information of the AC entrance being information of logical interface defined for each AC connection in the PE, and
wherein the VBD table is a form composed of one or more VBD records, each VBD record being marked by the VBD ID and each VBD record comprising information of all AC and PW exits currently assigned to the VBD by the PE.

2. The method according to claim 1, wherein the forwarding table comprises: source MAC address, destination MAC address of the packet, VBD ID, VPN ID, and information of PW or AC exits.

3. The method according to claim 1, wherein in the case where it cannot be acquired an exit for the packet from a forwarding table according to the VBD ID and a destination Media Access Control, MAC, address of the packet, acquiring an exit corresponding to the VBD from a VBD table according to the VBD ID, and sending the packet out after encapsulating it based on an encapsulation rule comprises:
extracting the destination MAC address of the packet;
determining (104) whether the PW or AC exit for the packet can be found out from the forwarding table according to the VBD ID and the destination MAC address;
in the case that the PW or AC exit for the packet can be found out, acquiring (104) the PW or AC exit for the packet, and sending out the packet in the case of the PW exit after encapsulating the packet by using the VBD ID based on the encapsulation rule, or directly sending out the packet in the case of the AC exit;
in the case that the PW or AC exit for the packet cannot be found out, using (105) the VBD ID to find, from the VBD table, all the AC and/or PW exits in the same VBD; in the case that the PE is in a Virtual Private Wire Service, VPWS, mode, sending out the packet under the circumstance of the PW exit after encapsulating the packet by using the VBD ID based on the encapsulation rule, or directly sending out the packet under the circumstance of the AC exit; in the case that the PE is in a Virtual Private Local Area Network Service, VPLS, mode, duplicating the packet according to the number of the AC and/or PW exits, and sending out the packet under the circumstance of the PW exit after encapsulating the packet by using the VBD ID based on the encapsulation rule, and/or directly sending out the packet under the circumstance of the AC exit,
wherein the encapsulation rule is adding the VBD ID in a specified field of the packet.

4. The method according to claim 1, wherein in the case where it cannot be acquired an exit for the packet from the forwarding table according to the VBD ID and the destination MAC address of the packet, acquiring the exit corresponding to the VBD from the VBD table according to the VBD ID, and sending the packet out after de-encapsulating it based on a de-encapsulation rule comprises:
extracting the VBD ID and the destination MAC address of the packet;
determining (106) whether the PW or AC exit for the packet can be found out from the forwarding table according to the VBD ID and the destination MAC address;
in the case that the PW or AC exit for the packet can be found out, directly sending out (106) the packet under the circumstance of the PW exit, or sending out the packet under the circumstance of the AC exit after de-encapsulating the packet based on the de-encapsulation rule;
in the case that the PW or AC exit for the packet cannot be found out, using (107) the VBD ID to find, from the VBD table, all the AC and/or PW exits in the same VBD; determining whether the PE is in the VPWS mode or the VPLS mode;
in the case that the PE is in the VPWS mode, directly sending out the packet under the circumstance of the PW exit, or sending out the packet under the circumstance of the AC exit after de-encapsulating the packet based on the de-encapsulation rule;
in the case that the PE is in the VPLS mode, duplicating the packet according to the number of the AC and/or PW exits, and directly sending out the packet under the circumstance of the PW exit, and/or, sending out the packet under the circumstance of the AC exit after de-encapsulating the packet based on the de-encapsulation rule,
wherein the de-encapsulation rule is deleting the VBD ID and PW information from the specified field of the packet.

5. A device for establishing a broadcast domain in a Layer 2 Virtual Private Network, L2VPN, comprising a Provider Edge, PE, and a Customer Edge, CE, a connection between the PE and the CE being an Attachment Circuit, AC, and a connection between the PE and the PE being a Pseudo Wire, PW, the device comprising: an Attachment Circuit, AC, processing module (21), a control module (23) and a Pseudo Wire, PW, processing module (22),
wherein the AC processing module (21) is configured to: when a packet is received from the control module (23), find out a Virtual Bridge Domain Index, VBD ID, of the packet according to an AC attribute table, in the case where it cannot be acquired an exit for the packet from a forwarding table at the control module (23) according to the VBD ID and a destination Media Access Control, MAC, address of the packet, acquire an exit corresponding to the Virtual Bridge Domain, VBD, from a VBD table according to the VBD ID, and send the packet out after encapsulating it based on an encapsulation rule, the VBD ID being the index set for each VBD and the VBD being obtained by dividing each VPN into one or more VBD,
wherein the control module (23) is configured to, when a packet is received from an AC, send the packet to the AC processing module (21), and when a packet is received from a PW, send the packet to the PW processing module (22), and provide the forwarding table and the VBD table for the AC processing module (21) and the PW processing module (22),
wherein the PW processing module (22) is configured to, when a packet is received, the packet being encapsulated by using the VBD ID based on an encapsulation rule, in the case where it cannot be acquired an exit for the packet from the forwarding table at the control module (23) according to the VBD ID encapsulated in the packet and the destination MAC address of the packet, acquire the exit corresponding to the VBD from the VBD table at the control module (23) according to the VBD ID, and send the packet out after de-encapsulating it based on a de-encapsulation rule,
wherein the control module (23) is configured to save the AC attribute table which is composed of information of an AC entrance on the PE, and the VBD ID and a VPN ID corresponding to the AC entrance, the information of the AC entrance being information of logical interface defined for each AC connection in the PE, and
wherein the control module (23) is configured to save the VBD table, the VBD table comprising a form composed of one or more VBD records, each VBD record being marked by the VBD ID and each VBD record comprising information of all AC and PW exits currently assigned to the VBD by the PE.

6. The device according to claim 5, wherein the control module (23) is configured to save the forwarding table, wherein the forwarding table comprises: source MAC address, destination MAC address of the packet, VBD ID, VPN ID, and information of PW or AC exits.

7. The device according to claim 5, wherein the AC processing module (21) is configured to:
extract the destination MAC address of the packet,
determine whether the PW or AC exit for the packet can be found out from the forwarding table at the control module (23) according to the VBD ID and the destination MAC address;
in the case that the PW or AC exit for the packet can be found out, acquire the PW or AC exit for the packet, and send out the packet in the case of the PW exit after encapsulating the packet by using the VBD ID based on the encapsulation rule, or directly send out the packet in the case of the AC exit;
in the case that the PW or AC exit for the packet cannot be found out, use the VBD ID to find, from the VBD table at the control module (23), all the AC and/or PW exits in the same VBD; in the case that the PE is in a Virtual Private Wire Service, VPWS, mode, send out the packet under the circumstance of the PW exit after encapsulating the packet by using the VBD ID based on the encapsulation rule, or directly send out the packet under the circumstance of the AC exit; in the case that the PE is in a Virtual Private Local Area Network Service, VPLS, mode, duplicate the packet according to the number of the AC and/or PW exits, and send out the packet under the circumstance of the PW exit after encapsulating the packet by using the VBD ID based on the encapsulation rule, and/or directly send out the packet under the circumstance of the AC exit,
wherein the encapsulation rule is adding the VBD ID in a specified field of the packet.

8. The device according to claim 5, wherein the PW processing module (22) is configured to:
extract the VBD ID and the destination MAC address of the packet;
determine whether the PW or AC exit for the packet can be found out from the forwarding table at the control module (23) according to the VBD ID and the destination MAC address;
in the case that the PW or AC exit for the packet can be found out, directly send out the packet under the circumstance of the PW exit, or send out the packet under the circumstance of the AC exit after de-encapsulating the packet based on the de-encapsulation rule;
in the case that the PW or AC exit for the packet cannot be found out, use the VBD ID to find, from the VBD table at the control module (23), all the AC and/or PW exits in the same VBD; determine whether the PE is in the VPWS mode or the VPLS mode;
in the case that the PE is in the VPWS mode, directly send out the packet under the circumstance of the PW exit, or send out the packet under the circumstance of the AC exit after de-encapsulating the packet based on the de-encapsulation rule;
in the case that the PE is in the VPLS mode, duplicate the packet according to the number of the AC and/or PW exits, and directly send out the packet under the circumstance of the PW exit, and/or, send out the packet under the circumstance of the AC exit after de-encapsulating the packet based on the de-encapsulation rule,
wherein the de-encapsulation rule is deleting the VBD ID and PW information from the specified field of the packet.

9. The device according to any one of claims 5 to 8, wherein the device is installed in the PE as a logical unit.

## Patentansprüche

1. Verfahren zum Aufbau einer Broadcast-Domäne in einem Layer 2 Virtual Private Network, L2VPN, welches einen Provider Edge, PE, und einen Customer Edge, CE, umfasst, wobei es sich bei einer Verbindung zwischen dem PE und dem CE um einen Attachment Circuit, AC, handelt, und wobei es sich bei einer Verbindung zwischen dem PE und dem PE um ein Pseudowire, PW, handelt, wobei das Verfahren die Schritte umfasst des:
wenn ein Paket von dem AC empfangen wird, Herausfindens (103) eines Virtual Bridge Domain-Index, VBD-ID, des Pakets gemäß einer AC-Attributtabelle; in dem Fall, dass kein Ausgang für das Paket aus einer Weiterleitungstabelle gemäß dem VBD-ID und einer Ziel-Media-Access-Control-, MAC-, Adresse des Pakets bezogen werden kann, Beziehens (105) eines Ausgangs, welcher der Virtual Bridge Domain, VBD, entspricht, aus einer VBD-Tabelle gemäß dem VBD-ID, und Versenden des Pakets, nachdem es basierend auf einer Verkapselungsregel verkapselt wurde, wobei es sich bei dem VBD-ID um den Indexsatz für jede VBD handelt und die VBD durch Teilen jedes VPN in eine oder mehrere VBD erhalten wird;
wenn ein Paket von dem PW empfangen wird, wobei das Paket unter Verwendung des VBD-ID basierend auf einer Verkapselungsregel verkapselt ist, in dem Fall, dass kein Ausgang für das Paket aus der Weiterleitungstabelle gemäß dem in dem Paket verkapselten VBD-ID und der Ziel-MAC-Adresse des Pakets bezogen werden kann, Beziehens (107) des Ausgangs, welcher der VBD entspricht, aus der VBD-Tabelle gemäß dem VBD-ID, und Versenden des Pakets, nachdem es basierend auf einer Entkapselungsregel entkapselt wurde,
wobei es sich bei der AC-Attributtabelle um eine Tabelle handelt, welche sich aus Informationen eines AC-Eingangs an dem PE, und dem VBD-ID und einem VPN-ID, die dem AC-Eingang entsprechen, zusammensetzt, wobei es sich bei den Informationen des AC-Eingangs um Informationen einer logischen Schnittstelle handelt, welche für jede AC-Verbindung in dem PE definiert ist, und
wobei es sich bei der VBD-Tabelle um eine Form handelt, welche sich aus einem oder mehreren VBD-Datensätzen zusammensetzt, wobei jeder VBD-Datensatz durch den VBD-ID gekennzeichnet ist und wobei jeder VBD-Datensatz Informationen von allen AC- und PW-Ausgänge umfasst, welche der VBD aktuell von dem PE zugewiesen sind.

2. Verfahren nach Anspruch 1, wobei die Weiterleitungstabelle umfasst: Quell-MAC-Adresse, Ziel-MAC-Adresse des Pakets, VBD-ID, VPN-ID, und Informationen von PW- oder AC-Ausgängen.

3. Verfahren nach Anspruch 1, wobei in dem Fall, dass kein Ausgang für das Paket aus einer Weiterleitungstabelle gemäß dem VBD-ID und einer Ziel-Media-Access,Control-, MAC-, Adresse des Pakets bezogen werden kann, das Beziehen eines Ausgangs, welcher der VBD entspricht, aus einer VBD-Tabelle gemäß dem VBD-ID, und Versenden des Pakets, nachdem es basierend auf einer Verkapselungsregel verkapselt wurde, umfasst:
Extrahieren der Ziel-MAC-Adresse des Pakets;
Ermitteln (104), ob der PW- oder AC-Ausgang für das Paket aus der Weiterleitungstabelle gemäß dem VBD-ID und der Ziel-MAC-Adresse herausgefunden werden kann;
in dem Fall, dass der PW- oder AC-Ausgang für das Paket herausgefunden werden kann, Beziehen (104) des PW- oder AC-Ausgangs für das Paket, und Versenden des Pakets im Falle des PW-Ausgangs, nachdem das Paket unter Verwendung des VBD-ID basierend auf der Verkapselungsregel verkapselt wurde, oder direktes Versenden des Pakets im Falle des AC-Ausgangs;
in dem Fall, dass der PW- oder AC-Ausgang für das Paket nicht herausgefunden werden kann, Verwenden (105) des VBD-ID, um aus der VBD-Tabelle alle die AC- und/oder PW-Ausgänge in der gleichen VBD ausfindig zu machen; in dem Fall, dass sich der PE in einem Virtual Private Wire Service-, VPWS-, Modus befindet, Versenden des Pakets unter dem Umstand des PW-Ausgangs, nachdem das Paket unter Verwendung des VBD-ID basierend auf der Verkapselungsregel verkapselt wurde, oder direktes Versenden des Pakets unter dem Umstand des AC-Ausgangs;
in dem Fall, dass sich der PE in einem Virtual Private Local Area Network Service-, VPLS-, Modus befindet, duplizieren des Pakets gemäß der Anzahl der AC- und/oder PW-Ausgänge, und Versenden des Pakets unter dem Umstand des PW-Ausgangs, nachdem das Paket unter Verwendung des VBD-ID basierend auf der Verkapselungsregel verkapselt wurde, und/oder direktes Versenden des Pakets unter dem Umstand des AC-Ausgangs, wobei die Verkapselungsregel den VBD-ID in einem spezifizierten Feld des Pakets hinzufügt.

4. Verfahren nach Anspruch 1, wobei in dem Fall, dass kein Ausgang für das Paket aus der Weiterleitungstabelle gemäß dem VBD-ID und der Ziel-MAC-Adresse des Pakets bezogen werden kann, das Beziehen des Ausgangs, welcher der VBD entspricht, aus der VBD-Tabelle gemäß dem VBD-ID, und Versenden des Pakets, nachdem es basierend auf einer Entkapselungsregel entkapselt wurde, umfasst:
Extrahieren des VBD-ID und der Ziel-MAC-Adresse des Pakets;
Ermitteln (106), ob der PW- oder AC-Ausgang für das Paket aus der Weiterleitungstabelle gemäß dem VBD-ID und der Ziel-MAC-Adresse herausgefunden werden kann;
in dem Fall, dass der PW- oder AC-Ausgang für das Paket herausgefunden werden kann, direktes Versenden (106) des Pakets unter dem Umstand des PW-Ausgangs, oder Versenden des Pakets unter dem Umstand des AC-Ausgangs, nachdem das Paket basierend auf der Entkapselungsregel entkapselt wurde;
in dem Fall, dass der PW- oder AC-Ausgang für das Paket nicht herausgefunden werden kann, Verwenden (107) des VBD-ID, um aus der VBD-Tabelle alle die AC- und/oder PW-Ausgänge in der gleichen VBD ausfindig zu machen;
Ermitteln, ob sich der PE im VPWS-Modus oder dem VPLS-Modus befindet;
in dem Fall, dass sich der PE im VPWS-Modus befindet, direktes Versenden des Pakets unter dem Umstand des PW-Ausgangs, oder Versenden des Pakets unter dem Umstand des AC-Ausgangs, nachdem das Paket basierend auf der Entkapselungsregel entkapselt wurde;
in dem Fall, dass sich der PE im VPLS-Modus befindet, Duplizieren des Pakets gemäß der Anzahl der AC-und/oder PW-Ausgänge, und direktes Versenden des Pakets unter dem Umstand des PW-Ausgangs, und/oder Versenden des Pakets unter dem Umstand des AC-Ausgangs, nachdem das Paket basierend auf der Entkapselungsregel entkapselt wurde,
wobei die Entkapselungsregel die VBD-ID- und PW-Informationen aus dem spezifizierten Feld des Pakets löscht.

5. Vorrichtung zum Aufbau einer Broadcast-Domäne in einem Layer 2 Virtual Private Network, L2VPN, welches einen Provider Edge, PE, und einen Customer Edge, CE, umfasst, wobei es sich bei einer Verbindung zwischen dem PE und dem CE um einen Attachment Circuit, AC, handelt, und wobei es sich bei einer Verbindung zwischen dem PE und dem PE um ein Pseudowire, PW, handelt, wobei die Vorrichtung umfasst: ein Attachment Circuit-, AC-, Verarbeitungsmodul (21), ein Steuerungsmodul (23), und ein Pseudowire-, PW-, Verarbeitungsmodul (22),
wobei das AC-Verarbeitungsmodul (21) dazu konfiguriert ist: wenn ein Paket von dem Steuerungsmodul (23) empfangen wird, einen Virtual Bridge Domain-Index, VBD-ID, des Pakets gemäß einer AC-Attributtabelle herauszufinden, in dem Fall, dass kein Ausgang für das Paket aus einer Weiterleitungstabelle an dem Steuerungsmodul (23) gemäß dem VBD-ID und einer Ziel-Media-Access-Control-, MAC-, Adresse des Pakets bezogen werden kann, einen Ausgang, welcher der Virtual Bridge Domain, VBD, entspricht, aus einer VBD-Tabelle gemäß dem VBD-ID zu beziehen, und das Paket zu versenden, nachdem es basierend auf einer Verkapselungsregel verkapselt wurde, wobei es sich bei dem VBD-ID um den Indexsatz für jede VBD handelt und die VBD durch Teilen jedes VPN in eine oder mehrere VBD erhalten wird,
wobei das Steuerungsmodul (23) dazu konfiguriert ist, wenn ein Paket von einem AC empfangen wird, das Paket an das AC-Verarbeitungsmodul (21) zu senden, und wenn ein Paket von einem PW empfangen wird, das Paket an das PW-Verarbeitungsmodul (22) zu senden, und die Weiterleitungstabelle und die VBD-Tabelle für das AC-Verarbeitungsmodul (21) und das PW-Verarbeitungsmodul (22) bereitzustellen,
wobei das PW-Verarbeitungsmodul (22) dazu konfiguriert ist, wenn ein Paket empfangen wird, wobei das Paket unter Verwendung des VBD-ID basierend auf einer Verkapselungsregel verkapselt ist, in dem Fall, dass kein Ausgang für das Paket aus der Weiterleitungstabelle an dem Steuerungsmodul (23) gemäß dem in dem Paket verkapselten VBD-ID und der Ziel-MAC-Adresse des Pakets bezogen werden kann, den Ausgang, welcher der VBD entspricht, aus der VBD-Tabelle an dem Steuerungsmodul (23) gemäß dem VBD-ID zu beziehen, und das Paket zu verwenden, nachdem es basierend auf einer Entkapselungsregel entkapselt wurde,
wobei das Steuerungsmodul (23) dazu konfiguriert ist, die AC-Attributtabelle, welche sich aus Informationen eines AC-Eingangs an dem PE, und dem VBD-ID und einem VPN-ID, die dem AC-Eingang entsprechen, zusammensetzt, zu speichern, wobei es sich bei den Informationen des AC-Eingangs um Informationen einer logischen Schnittstelle handelt, welche für jede AC-Verbindung in dem PE definiert ist, und
wobei das Steuerungsmodul (23) dazu konfiguriert ist, die VBD-Tabelle zu speichern, wobei die VBD-Tabelle eine Form umfasst, welche sich aus einem oder mehreren VBD-Datensätzen zusammensetzt, wobei jeder VBD-Datensatz durch den VBD-ID gekennzeichnet ist und wobei jeder VBD-Datensatz Informationen von allen AC- und PW-Ausgänge umfasst, welche der VBD aktuell von dem PE zugewiesen sind.

6. Vorrichtung nach Anspruch 5, wobei das Steuerungsmodul (23) dazu konfiguriert ist, die Weiterleitungstabelle zu speichern, wobei die Weiterleitungstabelle umfasst: Quell-MAC-Adresse, Ziel-MAC-Adresse des Pakets, VBD-ID, VPN-ID, und Informationen von PW- oder AC-Ausgängen.

7. Vorrichtung nach Anspruch 5, wobei das AC-Verarbeitungsmodul (21) dazu konfiguriert ist:
die Ziel-MAC-Adresse des Pakets zu extrahieren,
zu ermitteln, ob der PW- oder AC-Ausgang für das Paket aus der Weiterleitungstabelle an dem Steuerungsmodul (23) gemäß dem VBD-ID und der Ziel-MAC-Adresse herausgefunden werden kann;
in dem Fall, dass der PW- oder AC-Ausgang für das Paket herausgefunden werden kann, den PW- oder AC-Ausgang für das Paket zu beziehen, und das Paket zu versenden im Falle des PW-Ausgangs, nachdem das Paket unter Verwendung des VBD-ID basierend auf der Verkapselungsregel verkapselt wurde, oder das Paket direkt zu versenden im Falle des AC-Ausgangs;
in dem Fall, dass der PW- oder AC-Ausgang für das Paket nicht herausgefunden werden kann, den VBD-ID zu verwenden, um aus der VBD-Tabelle an dem Steuerungsmodul (23) alle die AC- und/oder PW-Ausgänge in der gleichen VBD ausfindig zu machen; in dem Fall, dass sich der PE in einem Virtual Private Wire Service-, VPWS-, Modus befindet, das Paket zu versenden unter dem Umstand des PW-Ausgangs, nachdem das Paket unter Verwendung des VBD-ID basierend auf der Verkapselungsregel verkapselt wurde, oder das Paket direkt zu versenden unter dem Umstand des AC-Ausgangs;
in dem Fall, dass sich der PE in einem Virtual Private Local Area Network Service-, VPLS-, Modus befindet, das Paket gemäß der Anzahl der AC- und/oder PW-Ausgänge zu duplizieren und das Paket zu versenden unter dem Umstand des PW-Ausgangs, nachdem das Paket unter Verwendung des VBD-ID basierend auf der Verkapselungsregel verkapselt wurde, und/oder das Paket direkt zu versenden unter dem Umstand des AC-Ausgangs,
wobei die Verkapselungsregel den VBD-ID in einem spezifizierten Feld des Pakets hinzufügt.

8. Vorrichtung nach Anspruch 5, wobei das PW-Verarbeitungsmodul (22) dazu konfiguriert ist:
den VBD-ID und die Ziel-MAC-Adresse des Pakets zu extrahieren;
zu ermitteln, ob der PW- oder AC-Ausgang für das Paket aus der Weiterleitungstabelle an dem Steuerungsmodul (23) gemäß dem VBD-ID und der Ziel-MAC-Adresse herausgefunden werden kann;
in dem Fall, dass der PW- oder AC-Ausgang für das Paket herausgefunden werden kann, das Paket direkt zu versenden unter dem Umstand des PW-Ausgangs, oder das Paket unter dem Umstand des AC-Ausgangs zu versenden,
nachdem das Paket basierend auf der Entkapselungsregel entkapselt wurde;
in dem Fall, dass der PW- oder AC-Ausgang für das Paket nicht herausgefunden werden kann, den VBD-ID zu verwenden, um aus der VBD-Tabelle an dem Steuerungsmodul (23) alle die AC- und/oder PW-Ausgänge in der gleichen VBD ausfindig zu machen; zu ermitteln, ob sich der PE im VPWS-Modus oder dem VPLS-Modus befindet;
in dem Fall, dass sich der PE im VPWS-Modus befindet, das Paket direkt zu versenden unter dem Umstand des PW-Ausgangs, oder das Paket unter dem Umstand des AC-Ausgangs zu versenden, nachdem das Paket basierend auf der Entkapselungsregel entkapselt wurde;
in dem Fall, dass sich der PE im VPLS-Modus befindet, das Paket gemäß der Anzahl der AC- und/oder PW-Ausgänge zu duplizieren und das Paket direkt zu versenden unter dem Umstand des PW-Ausgangs, und/oder das Paket unter dem Umstand des AC-Ausgangs zu versenden, nachdem das Paket basierend auf der Entkapselungsregel entkapselt wurde,
wobei die Entkapselungsregel die VBD-ID- und PW-Informationen aus dem spezifizierten Feld des Pakets löscht.

9. Vorrichtung nach einem der Ansprüche 5 bis 8, wobei die Vorrichtung in dem PE als eine logische Einheit installiert ist.

## Revendications

1. Procédé d'établissement d'un domaine de radiodiffusion dans un réseau privé virtuel de couche 2, L2VPN, comprenant un bord fournisseur, PE, et un bord client, CE, une connexion entre le PE et le CE étant un circuit de raccordement, AC, et une connexion entre le PE et le PE étant un pseudo-fil, PW, le procédé comprenant les étapes suivantes :
quand un paquet est reçu à partir de l'AC, la découverte (103) d'un index de domaine de pont virtuel, VBD ID, du paquet selon une table d'attributs d'AC ;
dans le cas où il n'est pas possible d'acquérir une sortie pour le paquet à partir d'une table de transfert en fonction d'un VBD ID et d'une adresse de contrôle d'accès au support, MAC, de destination du paquet, l'acquisition (105) d'une sortie correspondant au domaine de pont virtuel, VBD, à partir d'une table VBD en fonction du VBD ID, et l'envoi du paquet en sortie après l'avoir encapsulé sur la base d'une règle d'encapsulation, le VBD ID étant l'index fixé pour chaque VBD et le VBD étant obtenu en divisant chaque VPN en un ou plusieurs VBD ;
quand un paquet est reçu à partir du PW, le paquet étant encapsulé en utilisant le VBD ID sur la base d'une règle d'encapsulation, dans le cas où il n'est pas possible d'acquérir une sortie pour le paquet à partir de la table de transfert en fonction du VBD ID encapsulé dans le paquet et l'adresse MAC de destination du paquet, l'acquisition (107) de la sortie correspondant au VBD à partir de la table VBD en fonction du VBD ID, et l'envoi du paquet en sortie après l'avoir dé-encapsulé sur la base d'une règle de dé-encapsulation,
dans lequel la table d'attributs d'AC est une table composée d'informations d'une entrée d'AC sur le PE, et le VBD ID et un VPN ID correspondant à l'entrée d'AC, les informations de l'entrée d'AC étant des informations d'interface logique définie pour chaque connexion d'AC dans le PE, et
dans lequel la table VBD est une forme composée d'un ou plusieurs enregistrements de VBD, chaque enregistrement de VBD étant marqué par le VBD ID et chaque enregistrement de VBD comprenant des informations de toutes les sorties d'AC et de PW actuellement attribuées au VBD par le PE.

2. Procédé selon la revendication 1, dans lequel la table de transfert comprend : une adresse MAC source, une adresse MAC de destination du paquet, VBD ID, VPN ID et des informations de sorties de PW ou AC.

3. Procédé selon la revendication 1, dans lequel dans le cas où il n'est pas possible d'acquérir une sortie pour le paquet à partir d'une table de transfert en fonction d'un VBD ID et d'une adresse de contrôle d'accès au support, MAC, de destination du paquet, l'acquisition d'une sortie correspondant au VBD à partir d'une table VBD en fonction du VBD ID, et l'envoi du paquet en sortie après l'avoir encapsulé sur la base d'une règle d'encapsulation comprend :
l'extraction de l'adresse MAC de destination du paquet ;
la détermination (104) du fait que la sortie de PW ou d'AC pour le paquet peut être découverte à partir de la table de transfert en fonction d'un VBD ID et d'une adresse MAC de destination ;
dans le cas où la sortie de PW ou d'AC pour le paquet peut être découverte, l'acquisition (104) de la sortie de PW ou d'AC pour le paquet, et l'envoi du paquet en sortie dans le cas où de la sortie de PW après avoir encapsulé le paquet en utilisant le VBD ID sur la base de la règle d'encapsulation, ou l'envoi direct du paquet en sortie dans le cas de la sortie d'AC ;
dans le cas où la sortie de PW ou d'AC pour le paquet ne peut pas être découverte, l'utilisation (105) du VBD ID pour trouver, à partir de la table VBD, de toutes les sorties d'AC et/ou de PW dans le même VBD ; dans le cas où le PE est dans un mode de service filaire privé virtuel, VPWS, l'envoi du paquet en sortie dans le cas de la sortie de PW après avoir encapsulé le paquet en utilisant le VBD ID sur la base de la règle d'encapsulation, ou l'envoi direct du paquet en sortie dans le cas de la sortie d'AC ; dans le cas où le PE est dans un mode de service de réseau local privé virtuel, VPLS, la duplication du paquet en fonction du nombre de sorties d'AC et/ou de PW, et l'envoi du paquet en sortie dans le cas de la sortie de PW après avoir encapsulé le paquet en utilisant le VBD ID sur la base de la règle d'encapsulation, et/ou l'envoi direct du paquet en sortie dans le cas de la sortie d'AC,
dans lequel la règle d'encapsulation est l'ajout du VBD ID dans un champ spécifié du paquet.

4. Procédé selon la revendication 1, dans lequel dans le cas où il n'est pas possible d'acquérir une sortie pour le paquet à partir de la table de transfert en fonction du VBD ID et de l'adresse MAC de destination du paquet, l'acquisition d'une sortie correspondant au VBD à partir d'une table VBD en fonction du VBD ID, et l'envoi du paquet en sortie après l'avoir encapsulé sur la base d'une règle de dé-encapsulation comprend :
l'extraction du VBD ID et de l'adresse MAC de destination du paquet ;
la détermination (106) du fait que la sortie de PW ou d'AC pour le paquet peut être découverte à partir de la table de transfert en fonction du VBD ID et de l'adresse MAC de destination ;
dans le cas où la sortie de PW ou d'AC pour le paquet peut être découverte, l'envoi direct (106) du paquet en sortie dans le cas de la sortie de PW, ou l'envoi du paquet en sortie dans le cas de la sortie d'AC après avoir dé-encapsulé le paquet sur la base de la règle de dé-encapsulation ;
dans le cas où la sortie de PW ou d'AC pour le paquet ne peut pas être découverte, l'utilisation (107) du VBD ID pour trouver, à partir de la table VBD, de toutes les sorties d'AC et/ou de PW dans le même VBD ; la détermination du fait que le PE est dans le mode VPWS ou le mode VPLS ;
dans le cas où le PE est dans le mode VPWS, l'envoi direct du paquet en sortie dans le cas de la sortie de PW, ou l'envoi du paquet en sortie dans le cas de la sortie d'AC après avoir dé-encapsulé le paquet sur la base de la règle de dé-encapsulation ;
dans le cas où le PE est dans le mode VPLS, la duplication du paquet en fonction du nombre de sorties d'AC et/ou de PW, et l'envoi direct du paquet en sortie dans le cas de la sortie de PW et/ou l'envoi du paquet en sortie dans le cas de la sortie d'AC après avoir dé-encapsulé le paquet sur la base de la règle de dé-encapsulation,
dans lequel la règle de dé-encapsulation est la suppression du VBD ID et des informations de PW du champ spécifié du paquet.

5. Dispositif d'établissement d'un domaine de radiodiffusion dans un réseau privé virtuel de couche 2, L2VPN, comprenant un bord fournisseur, PE, et un bord client, CE, une connexion entre le PE et le CE étant un circuit de raccordement, AC, et une connexion entre le PE et le PE étant un pseudo-fil, PW, le dispositif comprenant : un module de traitement de circuit de raccordement, AC, (21), un module de commande (23) et un module de traitement de pseudo-fil, PW (22),
dans lequel le module de traitement d'AC (21) est configuré pour : quand un paquet est reçu à partir du module de commande (23), découvrir un index de domaine de pont virtuel, VBD ID, du paquet selon une table d'attributs d'AC, dans le cas où il n'est pas possible d'acquérir une sortie pour le paquet à partir d'une table de transfert au niveau du module de commande (23) en fonction d'un VBD ID et d'une adresse de contrôle d'accès au support, MAC, de destination du paquet, acquérir une sortie correspondant au domaine de pont virtuel, VBD, à partir d'une table VBD en fonction du VBD ID, et envoyer le paquet en sortie après l'avoir encapsulé sur la base d'une règle d'encapsulation, le VBD ID étant l'index fixé pour chaque VBD et le VBD étant obtenu en divisant chaque VPN en un ou plusieurs VBD,
dans lequel le module de commande (23) est configuré pour, quand un paquet est reçu à partir d'un AC, envoyer le paquet au module de traitement d'AC (21), et quand un paquet est reçu à partir d'un PW, envoyer le paquet au module de traitement de PW (22), et fournir la table de transfert et la table VBD pour le module de traitement d'AC (21), et le module de traitement de PW (22),
dans lequel le module de traitement de PW (22) est configuré pour, quand un paquet est reçu, le paquet étant encapsulé en utilisant le VBD ID sur la base d'une règle d'encapsulation, dans le cas où il n'est pas possible d'acquérir une sortie pour le paquet à partir de la table de transfert au niveau du module de commande (23) en fonction du VBD ID encapsulé dans le paquet et l'adresse MAC de destination du paquet, acquérir la sortie correspondant au VBD à partir de la table VBD au niveau du module de commande (23) en fonction du VBD ID, et envoyer le paquet en sortie après l'avoir dé-encapsulé sur la base d'une règle de dé-encapsulation,
dans lequel le module de commande (23) est configuré pour sauvegarder la table d'attributs d'AC qui est composée d'informations d'une entrée d'AC sur le PE, et le VBD ID et un VPN ID correspondant à l'entrée d'AC, les informations de l'entrée d'AC étant des informations d'interface logique définie pour chaque connexion d'AC dans le PE, et
dans lequel le module de commande (23) est configuré pour sauvegarder la table VBD, la table VBD comprenant une forme composée d'un ou plusieurs enregistrements de VBD, chaque enregistrement de VBD étant marqué par le VBD ID et chaque enregistrement de VBD comprenant des informations de toutes les sorties d'AC et de PW actuellement attribuées au VBD par le PE.

6. Dispositif selon la revendication 5, dans lequel le module de commande (23) est configuré pour sauvegarder la table de transfert, dans lequel la table de transfert comprend : une adresse MAC source, une adresse MAC de destination du paquet, VBD ID, VPN ID et des informations de sorties de PW ou AC.

7. Dispositif selon la revendication 5, dans lequel le module de traitement d'AC (21) est configuré pour :
extraire l'adresse MAC de destination du paquet,
déterminer le fait que la sortie de PW ou d'AC pour le paquet peut être découverte à partir de la table de transfert au niveau du module de commande (23) en fonction d'un VBD ID et d'une adresse MAC de destination ;
dans le cas où la sortie de PW ou d'AC pour le paquet peut être découverte, acquérir la sortie de PW ou d'AC pour le paquet, et envoyer le paquet en sortie dans le cas où de la sortie de PW après avoir encapsulé le paquet en utilisant le VBD ID sur la base de la règle d'encapsulation, ou envoyer directement le paquet en sortie dans le cas de la sortie d'AC ;
dans le cas où la sortie de PW ou d'AC pour le paquet ne peut pas être découverte, utiliser le VBD ID pour trouver, à partir de la table VBD au niveau du module de commande (23), toutes les sorties d'AC et/ou de PW dans le même VBD ; dans le cas où le PE est dans un mode de service filaire privé virtuel, VPWS, envoyer le paquet en sortie dans le cas de la sortie de PW après avoir encapsulé le paquet en utilisant le VBD ID sur la base de la règle d'encapsulation, ou envoyer directement le paquet en sortie dans le cas de la sortie d'AC ; dans le cas où le PE est dans un mode de service de réseau local privé virtuel, VPLS, dupliquer le paquet en fonction du nombre de sorties d'AC et/ou de PW, et envoyer le paquet en sortie dans le cas de la sortie de PW après avoir encapsulé le paquet en utilisant le VBD ID sur la base de la règle d'encapsulation, et/ou envoyer directement le paquet en sortie dans le cas de la sortie d'AC,
dans lequel la règle d'encapsulation est l'ajout du VBD ID dans un champ spécifié du paquet.

8. Dispositif selon la revendication 5, dans lequel le module de traitement de PW (22) est configuré pour :
extraire le VBD ID et l'adresse MAC de destination du paquet ;
déterminer le fait que la sortie de PW ou d'AC pour le paquet peut être découverte à partir de la table de transfert au niveau du module de commande (23) en fonction du VBD ID et de l'adresse MAC de destination ;
dans le cas où la sortie de PW ou d'AC pour le paquet peut être découverte, envoyer directement le paquet en sortie dans le cas de la sortie de PW, ou envoyer le paquet en sortie dans le cas de la sortie d'AC après avoir dé-encapsulé le paquet sur la base de la règle de dé-encapsulation ;
dans le cas où la sortie de PW ou d'AC pour le paquet ne peut pas être découverte, utiliser le VBD ID pour trouver, à partir de la table VBD au niveau du module de commande (23), toutes les sorties d'AC et/ou de PW dans le même VBD ; déterminer le fait que le PE est dans le mode VPWS ou le mode VPLS ;
dans le cas où le PE est dans le mode VPWS, envoyer directement le paquet en sortie dans le cas de la sortie de PW, ou envoyer le paquet en sortie dans le cas de la sortie d'AC après avoir dé-encapsulé le paquet sur la base de la règle de dé-encapsulation ;
dans le cas où le PE est dans le mode VPLS, dupliquer le paquet en fonction du nombre de sorties d'AC et/ou de PW, et envoyer directement le paquet en sortie dans le cas de la sortie de PW et/ou envoyer le paquet en sortie dans le cas de la sortie d'AC après avoir dé-encapsulé le paquet sur la base de la règle de dé-encapsulation,
dans lequel la règle de dé-encapsulation est la suppression du VBD ID et des informations de PW du champ spécifié du paquet.

9. Dispositif selon l'une quelconque des revendications 5 à 8, dans lequel le dispositif est installé dans le PE comme une unité logique.
